# EUROPEAN PATENT SPECIFICATION

(11) **EP 0 511 685 B1**
(45) Date of publication and mention of the grant of the patent: **14.08.1996**
(21) Application number: 92108616.1
(22) Date of filing: 12.04.1984
(51) Int. Cl.: G03G 15/20

(54) **Electrostatic copying apparatus**
Elektrostatisches Kopiergerät
Appareil à copier électrostatique

(30) Priority: 12.04.1983 JP 63051/83
(43) Date of publication of application: 04.11.1992
(62) Divisional of application: 87115898.6
(73) Proprietor: MITA INDUSTRIAL CO., LTD., Osaka 540 (JP)
(72) Inventor: Iida, Kazumi, Matsubara-shi, Osaka-fu (JP); Ohata, Yosuke, Habikino-shi, Osaka-fu (JP); Hyodo, Keiichiro, Makishima-cho, Uji-shi,Kyoto-fu (JP); Akiyama, Kazunori, Suita-shi, Osaka-fu (JP); Umeda, Tadashi, Yamato Takada-shi, Nara-ken (JP); Kishimoto, Keiichi, Kita Katsuragi-gun, Nara-ken (JP)
(74) Representative: Beetz & Partner Patentanwälte

(56) References cited:
- EP-A- 0 006 553
- US-A- 4 046 990
- US-A- 4 144 835
- US-A- 4 145 599
- PATENT ABSTRACTS OF JAPAN vol. 5, no. 161 (P-84)(833) 16 October 1981 ; & JP-A-56 092 558

## Description

This invention relates to an electrostatic copying apparatus and specifically to a fixing device as mentioned in the preamble portion of claim 1 or claim 6. Such an electrostatic copying apparatus is known from JP-A-56-92558.

A fixing device including an upper and a lower roller cooperating with each other and an electrical heating element disposed in at least one of these rollers has been widely used as the aforesaid fixing device. This conventional fixing device has the following problems.

In the conventional electrostatic copying apparatuses equipped with the aforesaid fixing device, various measures for saving power consumption are taken in relation to the temperature of the fixing device ascribable to the action of the electrical heating element, and the performance or non-performance of the copying cycle. But such measures have not proved to be entirely satisfactory.

JP-A-56-92558 discloses an electrostatic copying apparatus comprising a fixing device with an electrical heating element, a temperature detecting means for detecting temperature at a predetermined position of the fixing device, a copying cycle signal producing means for producing a copying cycle signal according to the performance of the copying cycle, a power supply switch, and control means for the electrical heating element and the power supply switch.

It is the object of this invention to provide an electrostatic copying apparatus which permits saving of power consumption based on the temperature of a fixing device and the performance or non-performance of the copying cycle.

The object is solved by the features of the claims 1 and 5. Further advantageous developments of the invention are described in the dependent claims.

Other objects and advantages of this invention will become apparent from the following description of embodiments of the invention.
Fig. 1 is a simplified longitudinal sectional view showing one embodiment of the electrostatic copying apparatus constructed in accordance with this invention;
Fig. 2 is a simplified cross-sectional view of the electrostatic copying apparatus of Fig. 1;
Fig. 3 is a sectional view showing the vicinity of a fixing device;
Fig. 4 is a perspective view showing a guide member;
Fig. 5 is a sectional view showing the state in which a sheet material having relatively high stiffness is used;
Fig. 6 is a circuit diagram showing a part of a control system for the electrostatic copying apparatus of Fig. 1;
Fig. 7 is a graph showing the relation between the temperature detected by a thermistor and the time; and
Fig. 8 is a graph showing the relation between the temperature detected by a thermistor and the time in a modified example.

### DETAILED DESCRIPTION OF PREFERRED EMBODIMENTS

### Outline of the copying apparatus as a whole

The entire structure of one embodiment of the electrostatic copying apparatus which has been improved in various respects in accordance with this invention will first be described.

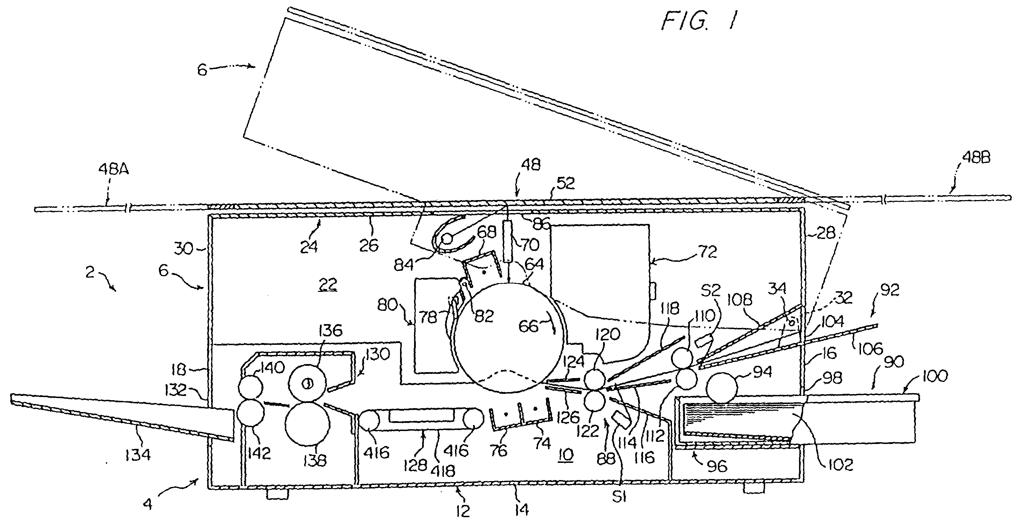

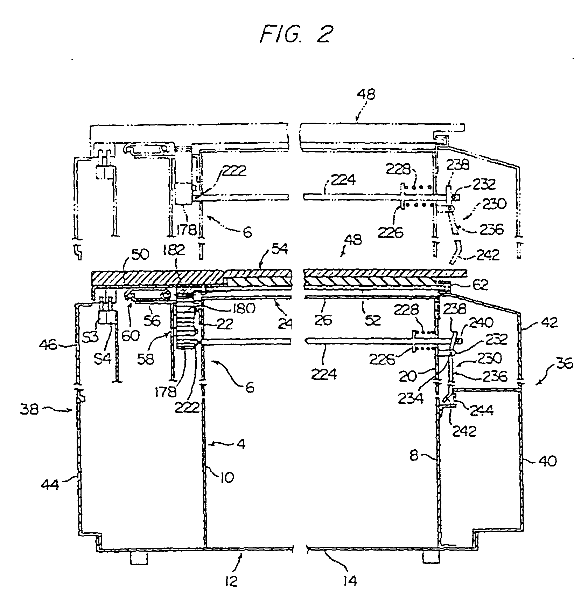

With reference to Figure 1, the illustrated copying apparatus has a nearly rectangular parallel-pipedal housing shown generally at 2. The housing 2 is defined by a lower supporting frame 4 and an upper supporting frame 6. With reference to Figure 2 together with Figure 1, the lower supporting frame includes a vertical front base plate 8 and a vertical rear base plate 10 disposed with a predetermined distance therebetween in the front-rear direction (a direction perpendicular to the sheet surface in Figure 1, and the left-right direction in Figure 2), and a bottom plate 12 fixed to the lower ends of these plates. The bottom plate 12 has a bottom wall portion 14 defining the bottom surface of the housing 2 and lower surface wall portions 16 and 18 defining the nearly lower half portions of the two side surfaces of the housing 2. On the other hand, the upper supporting frame 6 includes a vertical front base plate 20 and a vertical rear base plate 22 disposed with a predetermined distance therebetween in the front-rear direction and a top plate 24 fixed to the upper ends of these plates. The top plate 24 has a top wall portion 26 defining the top surface of the housing 2 and upper surface wall portions 28 and 30 defining the nearly upper half portions of the two side surfaces of the housing 2. The upper supporting frame 6 is mounted on the lower supporting frame 4 so that it can pivot freely between a closed position shown by solid lines in Figures 1 and 2 and an open position shown by two-dot chain lines in Figures 1 and 2. More specifically, upwardly extending supporting projections 32 are provided at the right end portions of the vertical front base plate 8 and the vertical rear base plate 10 of the lower supporting frame 4, and the vertical front base plate 20 and the vertical rear base plate 22 of the upper supporting frame 6 are pivotally mounted on these supporting projections 32 through a shaft 34. Normally, the upper supporting frame 6 is locked in the closed position shown by the solid lines in Figures 1 and 2 by a suitable locking mechanism (not shown), but as required, can be pivoted to the open position shown by the two-dot chain lines in Figures 1 and 2 with the shaft 34 as a center by cancelling the locking action of the locking mechanism.

In the illustrated copying apparatus, there are also provided a front cover 36 covering the front surface of the housing 2 and a rear cover 38 for covering the rear surface of the housing 2, as shown in Figure 2. The front cover 36 is comprised of a lower front cover 40 fixed to the lower supporting frame 4 and an upper front cover 42 fixed to the upper supporting frame 6. Likewise, the rear cover 38 is comprised of a lower rear cover 44 fixed to the lower supporting frame 4 and an upper rear cover 46 fixed to the upper supporting frame 6. Accordingly, when the upper supporting frame 6 is moved from the closed position to the open position, approximately the upper half portions of the front cover 36 and the rear cover 38, i.e. the upper front cover 42 and the upper rear cover 46, can be moved to the open position in the same way.

A document placing means shown generally at 48 is disposed on the top surface of the housing 2 so that it can reciprocate freely in the left-right direction in Figure 1 or a direction perpendicular to the sheet surface in Figure 2. As clearly shown in Figure 2, the document placing means 48 which may be in a form known per se includes a supporting base plate 50, a transparent plate 52 fixed to the supporting base plate 50, and a document cover 54 (omitted in Figure 1) whose rear edge (left edge in Figure 2) is pivotably mounted on the supporting base plate 50 by a suitably mechanism (not shown). With reference to Figure 2, the method of mounting the document placing means 48 will be described. A supporting member 58 having a horizontal portion 56 is fixed to the rear surface of the vertical rear base plate 22 of the upper supporting frame 6, and between the horizontal portion 56 of the supporting member 58 and the supporting base plate 50 of the document placing means 48 is interposed a sliding mechanism 60 (which may conveniently be one commercially available under the tradename "Aculide")' extending in the reciprocating direction of the document placing means 48. On the other hand, a guide member 62 having a rearwardly opened guide groove at its upper portion extending upwardly beyond the top surface of the housing 2 is fixed to the front surface of the vertical front base plate 20 of the upper supporting frame 6. The front edge portion of the transparent plate 52 of the document placing means 48 is slidably received in the guide groove of the guide member 62. Thus, the document placing means 48 is mounted such that it can freely reciprocate between a start-of-scan position shown by a two-dot chain line 48A in Figure 1 and a scan movement limit position shown by a two-dot chain line 48B in Figure 1.

With reference to Figure 1, a rotating drum 64 having a photosensitive member on its peripheral surface is rotatably mounted nearly centrally within the housing 2. Areound the rotating drum 64 adapted to be rotated in the direction of an arrow 66 are disposed a charging corona discharge device 68, an optical unit 70, a latent electrostatic image developing device 72, a transferring corona discharge device 74, a peeling corona discharge device 76, a cleaning device 80 having a cleaning blade 78 and a charge eleminating lamp 82 in this sequence in the rotating direction of the drum 64. In relation to the optical unit 70, a document illuminating lamp 84 is also provided. The document illuminating lamp 84 illuminates a document (not shown) to be copied, placed on the transparent plate 52 of the document placing means 48, through an opening 86 formed at the top wall portion 26 of the top plate 24. The optical unit 70 is constructed by arranging many elongate optical elements extending in the vertical direction (for example, rod-like lenses sold under the tradename "Selfoc Microlense" by Nippon Sheet Glass Co., Ltd.), and as shown by an arrow in Figure 1, projects the reflected light from the document onto the peripheral surface of the rotating drum 64.

A sheet material conveying device shown generally at 88 is disposed in the nearly lower half portion of the housing 2. At one end (the right end in Figure 1) of the sheet material conveying device 88 are provided a cassette-type copying paper feed device 90 and a manual sheet feed device 92. The copying paper feed device 90 consists of a combination of a paper cassette receiving section 96 having a feed roller 94 provided therein and a paper cassette 100 to be loaded in the paper cassette receiving section 96 through an opening 98 formed on the right side surface of the housing 2 (more specifically the right side lower surface wall portion 16 of the bottom plate 12), and feeds copying paper sheets one by one from a copying sheet layer 102 accommodated in the cassette 100 by the action of the feed roller 94. The manual feed device 92 includes a guide plate 106 protruding outwardly through an opening 104 formed in the right side surface of the housing 2, a guide plate 108 located above the guide plate 106, and a pair of feed rollers 110 and 112 located downstream of (on the left in Figure 1) the guide plates 106 and 108. When a suitable sheet material such as a sheet-like copying paper is positioned on the guide plate 106 and advanced to the nipping position of the feed rollers 110 and 112, these feed rollers 110 and 112 nips the sheet material and feeds it. The copying paper fed from the copying paper feed device 90 between the guide plates 114 and 116 or the sheet material fed from the manual feed device 92 between the guide plates 114 and 118 is passed between guide plates 124 and 126 by the action of a pair of conveying rollers 120 and 122 and conveyed to a position between the rotating drum 64 and the transferring corona discharge device 74 and the peeling corona discharge device 76. Then, by the action of a suitable conveying belt mechanism 128, it is sent to a fixing device 130. Thereafter, it is discharged into a receiving tray 134 through an opening 132 formed in the left side surface of the housing 2 (more specifically, the left side lower surface wall portion 18 of the bottom plate 12). The fixing device 130 includes a fixing roll pair comprised of an upper roller 136 and a lower roller 138 cooperating with each other (the structure of the fixing device 130 will be described in detail hereinafter). The sheet material from the fixing roller is discharged into the receiving tray 134 by the action of a pair of discharge rollers 140 and 142.

Thus, it will be easily understood with reference to Figure 1 that the guide plate 108, the feed roller 110, the guide plate 118, the conveying roller 120 and the guide plate 124 in the sheet material conveying device 88 are mounted on the upper supporting member 6 together with the rotating drum 64, the charging corona discharge device 68, the optical unit 70, the developing device 72, the cleaning means 80, the charge eliminating lamp 82 and the document illuminating lamp 84. On the other hand, the copying paper feed device 90, the guide plate 106, the feed roller 112, the guide plate 114, the guide plate 116, the conveying roller 122, the guide plate 126, the transferring corona discharge device 74, the peeling corona discharge device 76, the conveying belt mechanism 128, the fixing device 130 and the receiving tray 134 are mounted on the lower supporting frame 4. Accordingly, when the upper supporting frame 6 is moved from the closed position shown by the solid line to the open position shown by the two-dot chain line, most of the conveying passage for the sheet material is opened, and therefore in the event of jamming, the sheet material can be easily taken out from it.

In the copying apparatus described above, the charging corona discharge device 68 charges the photosensitive member to a specified polarity substantially uniformly while the rotating drum is rotated in the direction of arrow 66. Then, the image of the document is projected onto the photosensitive member through the optical unit 70 (at this time, the document placing means 48 makes a scanning exposure movement to the right in Figure 1 from the start-of-scan position shown by the two-dot chain line 48A in Figure 1) to form on the photosensitive member a latent electrostatic image corresponding to the document. Thereafter, the developing device 72 applies toner particles to the latent electrostatic image on the photosensitive member to develop it to a toner image. Subsequently, a sheet material such as copying paper fed from the copying paper feed device 90 or the manual sheet feed device 92 is brought into contact with the photosensitive member, and by the action of the transferring corona discharge device 74, the toner image on the photosensitve member is transferred to the sheet material. The sheet material is then peeled off from the photosensitive member by the action of the peeling corona discharge device 76. The sheet material having the toner image transferred thereto is then conveyed to the fixing device 130 where the toner image is fixed. The sheet material having the fixed toner image is then discharged into the receiving tray 134. In the meantime, the rotating drum 64 continues to rotate. The residual toner particles are removed from the photosensitive member by the action of the cleaning device 80, and the residual charge on the photosensitive member is erased by the action of the charge eliminating lamp 82.

### Fixing device

In the fixing device used in the electrostatic copying apparatus described above, a toner image on a sheet meterial is fixed on its surface by conveying the sheet material having the toner image transferred in the transferring zone between a pair of fixing rollers. Generally, in such a fixing device, the downstream end of a guide member provided upstream of the pair of fixing rollers for guiding the sheet material to the fixing rollers (i.e., that end of the guide member which is in proximity to the pair of fixing rollers) is positioned above the nip position of the pair of fixing rollers. When the downstream end of the guide member is so positioned, a sheet material of relatively low stiffness which is frequently used is bent by the downstream end of the guide member, and by this bending action, creases of that portion of the sheet material which is introduced between the fixing rollers are straightend, and it is possible to prevent the occurrence of creases on the sheet material during fixing by the fixing rollers. On the other hand, when a sheet material having relatively high stiffness [for example, an official postal card (which is not often used)] is used, the leading end of the sheet material contacts the upper fixing roller in the fixing roller pair and conveying of the sheet material may fail (jamming occurs). Or the trailing end portion of the sheet may abruptly rise upstream of the downstream end of the guide member to disturb the unfixed toner image on the sheet material.

In an attempt to remove the foregoing inconvenience, Japanese Laid-Open Utility Model Publication No. 66947/ 1978, for example, proposes a fixing device in which a notch or a depressed portion is formed centrally in the downstream end of a guide member for guiding a sheet material to a pair of fixing rollers so that the central portion of the sheet material carried between the fixing rollers can sag down. Elsewhere, Japanese Laid-Open Utility Model Publication No. 3558/1981 proposes a fixing device in which a guide portion for conducting a sheet material having relatively high stiffness to the nipping position of a pair of fixing rollers is provided in a guide member for guiding a sheet material to the fixing rollers.

In the fixing devices disclosed in the specifications of Japanese Laid-Open Utility Model Publications Nos. 66947/1978 and 3558/1981, a sheet material having a relatively small size and relatively high stiffness can be conveyed to near the nip position of the pair of fixing rollers, and the toner image can be fixed on it well. But a sheet material having a relatively small size and relatively low stiffness is not bent at the downstream end of the guide member and creases are likely to form on the sheet material during fixing by the pair of fixing rollers.

The fixing device of the present invention has the following improvement in order to remove the aforesaid inconvenience.

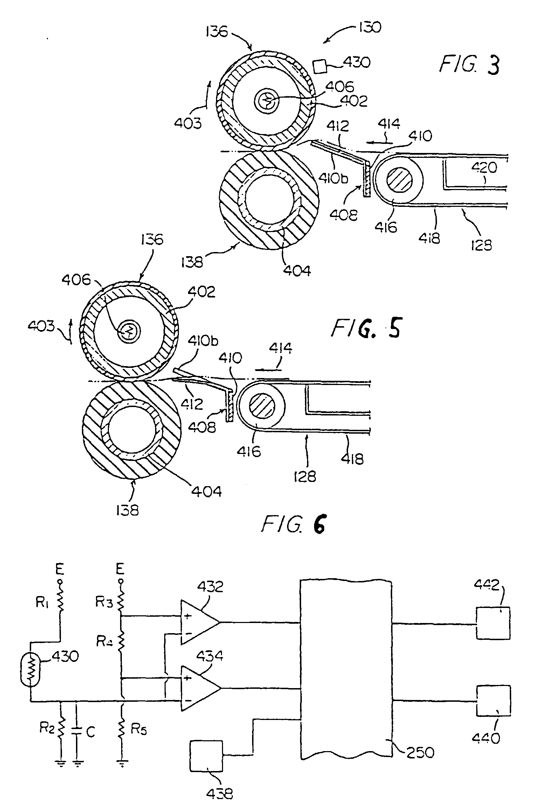

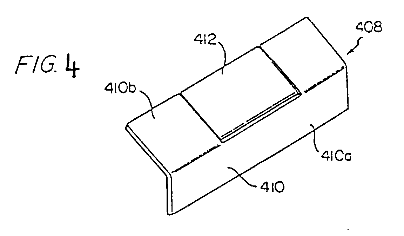

With reference to Figures 3 and 4, the fixing device will be described below in detail.

With reference to Figure 3 , the fixing device 130 has a fixing roller pair composed of an upper roller 136 and a lower roller 138 cooperating with each other. In the illustrated embodiment, the upper roller 136 to be driven in the direction of an arrow 403 is constructed of a cylindrical sleeve member 402 made of aluminum having a surface coated with "Teflon" (a tradename for polytetrafluoroethylene made by E. I. du Pont de Nemours & Co.), and the lower roller 138 is constructed of a metallic pipe member 404 surface-coated with rubber, etc. Within the upper roller 136 is disposed an electrical heating element 406 such as an electric heater for fixing the toner image on the sheet material under heat.

Upstream of the fixing roller pair is disposed a guide member 408 for conducting a sheet material conveyed by the action of the conveyer belt mechanism 128 to the fixing roller pair. As shown in Figure 4, the guide member 408 has a main guide 410 formed of a rigid material such as a metallic material and a guide 412 made of a flexible material. The main guide 410 has a securing portion 410a (constituting the securing portion of the guide member 408) and a guiding portion 410b extending from the securing portion 410a. A rectangular cut having a predetermined width is provided in the central part of the guiding portion 410b in the widthwise direction (the direction perpendicular to the sheet surface in Figure 3 and the direction from left bottom to the right top in Figure 4 ) (more specifically, the cut is formed from the upstream end to the downstream end of the guiding portion 410). The guide 412 is disposed in the aforesaid cut by fixing its upstream end to the securing portion 410a of the main guide 410. Thus, the guide 412 and the guiding portion 410b of the main guide 410 constitutes the guiding portion of the guide member 408, and the guide 412 defines a specified area of the guiding portion of the guide member 408. Preferably, the upper surface of the guide 412 is disposed in the same plane as the upper surface of the guiding portion 410b of the main guide 410. Preferably, the guide 412 of a flexible material is a polyester film having a thickness of about 0.1 mm (for example, those commercially available under the tradenames "Lumilar" and "Mylar"). In the illustrated embodiment, a sheet material having relatively high stiffness is assumed to be an official post card, and the width of the aforesaid specified area is set at about 100 mm (substantially equal to, or slightly larger than, the width of the official post card).

The guide member 408 consisting of the main guide 410 and the guide 412 is fixed to a supporting vertical wall provided in the bottom wall portion 14 which defines the bottom surface of the housing 2 (Figure 1). As is clear from Figure 3 , the guiding portion of the guide member 408 extends upwardly inclinedly toward the downstream side (more specifically, toward the downstream side in the conveying direction of the sheet material shown by an arrow 414), and its lower end portion is positioned slightly above the nip position of the fixing roller pair (the upper roller 136 and the lower roller 138) and in proximity to the peripheral surface of the upper roller 136. The upstream end (that end which is in proximity to the conveying belt mechanism 128) of the guiding portion of the guide member 408 is positioned below the nip position of the fixing roller pair.

The illustrated conveying belt mechanism 128 includes a pair of rollers 416 (Figure 1) and an endless conveying belt 418 having a plurality of holes formed therein. The conveyor belt 418 is stretched across the rollers 416, and a suction chamber 420 is disposed between the upper portion (the portion acting for conveying the sheet material) and the lower portion of the conveyor belt 418. That surface of the suction chamber 420 which faces the upper portion of the conveyor belt 418 is opened. The inside of the suction chamber 420 is sucked by a suction motor (not shown), and by the sucking action of the suction motor, the sheet material conveyed on the upper portion of the conveyor belt 418 is attracted to the conveyor belt 418.

In the fixing device 130 described above, the sheet material having a toner image on its upper surface which is conveyed on the conveyor belt 418 is conducted to the fixing roller pair by being guided by the upper surface of the guiding portion of the guide member 408. By the fixing action of the fixing roller pair, the toner image is fixed to the surface of the sheet material.

The operation and advantage of the fixing device 130 including the guide member 408 described above will be described with reference to Figures 3 to 5 .

Let us first assume that a sheet material having a relatively large width (more specifically larger than the width of the aforesaid specified area in the transverse direction) is used. As can be easily understood from Figure 4 , the sheet material is raised while being guided mainly by the upper surface of the guiding portion 410b of the main guide 410 of the guide member 408, and thereafter, lowered and conducted to the nip position of the fixing roller pair (the upper roller 136 and the lower roller 138). Accordingly, the sheet material is conveyed as shown by a two-dot chain line in Figure 3 and bent by the downstream end of the guiding portion 410b of the main guide 410. Creases will be straightened by this bending action. As a result, the sheet material can be introduced between the fixing rollers after its creases have been removed, and the occurrence of creases in the sheet material during the fixing operation can be prevented.

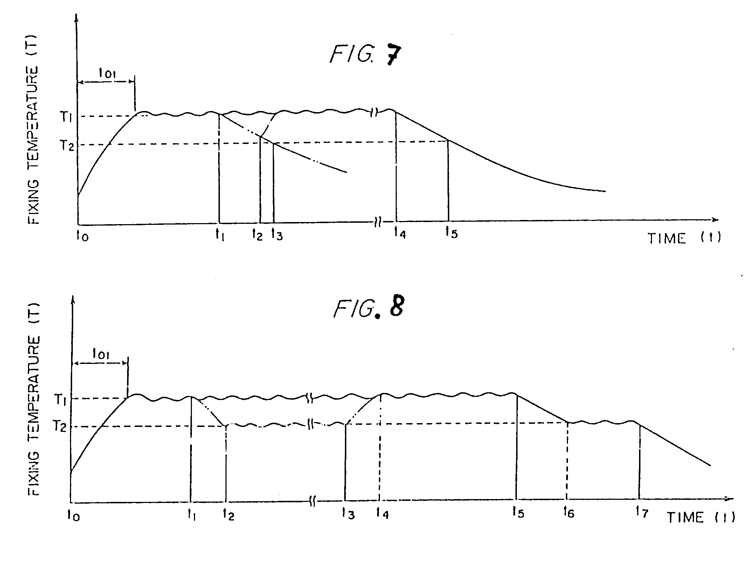

Now, let us assume that a sheet material having a relatively small width (more specifically smaller than the width of the aforesaid specified area in the transverse direction) and relatively high stiffness (generally sheet materials having relatively high stiffness mostly have a large weight), for example, an official post card, is used. As can be readily understood from Figure 4 , the sheet material is conducted to the nip position of the fixing roller pair by being guided by the upper surface of the guide 412 (the specified area). When the sheet material is guided over the upper surface of the guide 412, the downstream end portion of the guide 412 is bent downwardly by the weight of the sheet material as shown in Figure 5 because the guide 412 is made of a flexible material. Thus, the downstream end of the guide 412 is at nearly the same height as the nip position of the fixing roller pair. Accordingly, the sheet material is conveyed as shown by a two-dot chain line in Figure 5 and conveyed to the nip position of the fixing roller pair nearly in a straight line fashion without being bent by the downstream end of the guide 412. Thus, sheet jamming and disturbance of the unfixed toner image, which may occur when a sheet material having relatively high stiffness is used, can be prevented.

Now, let us assume that a sheet material having a relatively small width (more specifically, smaller than the width of the specified area in the transverse direction) and relatively low stiffness (generally sheet materials having relatively low stiffness have a small weight) is used. The sheet material in this case is brought to the nip position of the fixing roller pair while being guided by the upper surface of the guide 412 (specified area). But since its weight is small, the downstream end portion of the guide 412 is not so much bent downwardly when the sheet material is guided over the upper surface of the guide 412. The sheet material is raised by being guided by the upper surface of the guide 412 and then lowered and conducted to the nip position of the fixing roller pair. Accordingly, the sheet material is conveyed as shown by a two-dot chain line in Figure 5 and bent by the downstream end of the guide 412. Creases in the sheet material will be straightened by this bending action. In this case, too, the sheet material can be passed between the fixing rollers after its creases have been removed.

In the embodiment described above, the guide 412 (specified area) is disposed in the central portion of the guiding portion of the guide member 408 in the widthwise direction. When a sheet material having a relatively small size is to be guided on the upper surface of the left side portion (or the right side portion) in the widthwise direction of the guiding portion of the guide member 408, the guide 412 may be provided in the left side portion (or the right side portion) in the widthwise direction of the guiding portion of the guide member 408.

The above embodiment is applied to a fixing device including an electrical heating element. It can, however, be also applied to a fixing device of the pressure type which is adapted to fix the toner image on the sheet material only by the pressure between the fixing rollers.

### Controlling of the fixing device based on temperature

In an electrostatic copying apparatus having a fixing device equipped with an electrical heating element such as an electric heater, the type described hereinabove, various improvements have been suggested for saving power consumption. For example, Japanese Laid-Open Patent Publication No. 92558/1981 discloses an electrostatic copying apparatus including a timer circuit which starts its operation when the temperature of an electrical heating element reaches a predetermined temperature after closing a power supply switch or when the copying cycle has ended, and generates a signal when the above operation continued for a preset period of time; a reset means for resetting the timer circuit when a copying cycle signal is generated within the period of time preset in the timer circuit; and a current shutting means for shutting the passing of an electric current to the electrical heating element when the signal is outputted from the timer circuit. In the electrostatic copying apparatus disclosed in this patent document, the timer circuit operates when the temperature of the electrical heating element reaches a predetermined point after closing the power supply switch or the copying cycle has ended. When thereafter no copying cycle signal is gnerated within a predetermined period of time, a signal is outputted by the timer circuit to cut off the passing of a current to the electrical heating element. Thus, after the lapse of a predetermined period of time from the operation of the timer circuit, power consumption by the electrical heating element is prevented.

In the above electrostatic copying apparatus, when a predetermined period of time elapses without resetting after the actuation of the timer circuit, the passing of an electric current to the electrical heating element is shut off. On the other hand, when a copying cycle signal is generated within the predetermined period of time after the actuation of the timer circuit, the timer circuit is reset, and the electrical heating element continues to be maintained at a predetermined temperature. Accordingly, the power consumption by the electrical heating element is not sufficiently reduced, and it is still desired to reduce power consumption more effectively without affecting the fixing operation.

To solve the aforesaid problem, the electrostatic copying apparatus having the fixing device equipped with the electrical heating element constructed in accordance with this invention is improved in the following respect.

With reference to Figures 6 to 8 , the electrostatic copying apparatus including the fixing device 130 with the electrical heating element 406 comprises a temperature detecting means for detecting the temperature of the fixing device 130 at a predetermined position. In the illustrated embodiment, the temperature detecting means is comprised of a thermistor 430 whose resistance value decreases with an increase in temperature. As shown in Figure 3 , the thermistor 430 is provided in proximity to the peripheral surface of the upper roller 136 of the fixing roller pair (and therefore, the thermistor 430 detects the temperature of the surface of the upper roller 136 or its vicinity). With reference to Figure 6 , one terminal of the thermistor 430 is connected to a power supply E via a resistance R₁, and the other terminal is connected to one input terminal of each of a first comparator 432 and a second comparator 434. One terminal each of a resistance R₂ and a condenser C disposed parallel to each other is connected to the connecting portion between the other terminal of the thermistor 430 and the one input terminal of the first comparator 432 and the one input terminal of the second comparator 434. The other terminals of the resistance R₂ and condenser C are respectively grounded. A circuit portion including resistances R₃, R₄ and R₅ connected to each other in series is disposed parallel to the aforesaid circuit portion including the resistance R₁, the thermistor 430, the resistance R₂ and the condenser C. One end of the circuit portion (one terminal of the resistance R₃) is connected to a power supply E, and the other terminal(one terminal of the resistance R₅) is grounded. The connecting portion between the resistances R₃ and R₄ is connected to the other input terminal of the first comparator 432, and the connecting portion between the resistances R₄ and R₅ is connected to the other input terminal of the second comparator 434. Accordingly, the voltage of the other terminal of the thermistor 430 is applied to one input terminal of the first comparator 432, and the voltage of the connecting portion between the resistances R₃ and R₄ (a first reference voltage) is applied to the other input terminal of the first comparator 432. The first comparator 432 produces a signal "H" when the voltage of the other terminal of the termistor 430 becomes lower than the voltage of the connecting portion between the resistances R₃ and R₄. The voltage of the other terminal of the thermistor 430 is applied to one input terminal of the second comparator 434, and the voltage (a second reference voltage) of the connecting portion between the resistances R₄ and R₅ is applied to the other input terminal of the second comparator 434. The second comparator 434 generates a signal "H" when the voltage of the other terminal of the thermistor 430 becomes lower than the voltage of the connecting portion between the resistances R₄ and R₅. The voltage of the connecting portion between the resistances R₃ and R₄ and the voltage of the connecting portion between the resistances R₄ and R₅, i.e. the first and second reference voltages, can be set at desired values by properly selecting the resistance values of the resistances R₃, R₄ and R₅. In the illustrated embodiment, the first reference voltage is set so that it becomes equal to the voltage of the other terminal of the thermistor 430 (and therefore the voltage applied to one input terminal of the first comparator) at which the temperature detected by the termistor 430 is a first predetermined temperature T₁ (for example, about 185^{o}C) suitable for fixation. The second reference voltage is set so that it becomes equal to the voltage of the other terminal of the thermistor 430 (and therefore the voltage applied to one input terminal of the second comparator 434) at which the temperature detected by the thermistor 430 is a second predetermined temperature T₂ which does not adversely affect the fixing operation even when the copying cycle is started. Accordingly, when the temperature detected by the thermistor 430 (i.e. the temperature of the surface of the upper roller 136 or its vicinity) is lower than the first predetermined temperature T₁, the first comparator 432 generates a signal "H". When the temperature detected by the thermistor 430 is lower than the second predetermined temperature T₂, the second comparator 434 generates a signal "H".

The output signals from the first comparator 432 and the second comparator 434 are fed into the aforesaid control means 250 which may preferably be constructed of a microprocessor. A copying cycle signal from a copying cycle signal producing means 438 is also fed to the control means 250. The copying cycle signal producing means 438 is constructed, for example, of a signal producing means which produces a copying cycle signal until the copying cycle has been performed through a preset number of cycles after depression of a copying start switch (not shown). The copying cycle signal producing means 438 may also be adapted to start generation of a copying cycle signal in response not to the closing of the copying start switch but to an operation carried out prior to the starting of the copying cycle, for example, to the operation of a setting key for presetting the number of copies to be produced. Alternatively, the signal producing means 438 may be adapted to produce a copying cycle signal without fail for a predetermined time upon closing of the power supply switch.

On the other hand, in the control means 250, an actuation signal for energizing the electrical heating element 406 (Figure 3 ) in relation to the signal "H" from the first comparator 432 is produced in the control means 250, and a power supply shutting signal for opening the power supply switch 440 of the electrostatic copying apparatus in relation to the signal "H" from the second comparator 434 is also generated. The actuation signal is fed to a switch means 442 disposed in a circuit for supplying an electrical current to the electrical heating element 406, and the power supply shutting signal, to the power supply switch 440. The control means 250 illustrated is constructed such that it continues to produce the actuation signal after the closing of the power supply switch 440 until the temperature detected by the thermistor 430 exceeds the first predetermined temperature T₁.

With reference to Figures 6 and 7 , the controlling of the fixing device in the aforesaid electrostatic copying apparatus on the basis of temperature will be described.

When the power supply switch 440 is closed, the control means 250 produces an actuation signal which is then fed into the switch means 442. As a result, the switch means 442 is closed, and an electric current is passed through the electrical heating element 406 via the switch means 442. As a result, the fixing device 130 is heated by the electrical heating element 406 until the temperature detected by the thermistor 430 reaches the first predetermined temperature T₁ (about 185^{o}C, for example). Hence, when the power supply switch 440 is closed at time tₒ, the fixing device 130 is heated by the passing of a current through the electrical heating element 406, and the temperature detected by the thermistor 430 is raised as shown by a solid line in Figure 7 . After the lapse of time tₒ₁ from the time tₒ, the temperature detected by the thermistor 430 reaches the first predetermined temperature T₁.

When the temperature detected by the thermistor 430 reaches the first predetermined temperature T₁, the voltage of the other terminal of the thermistor (and therefore the voltage applied to one input terminal of the first comparator 432) becomes higher than the voltage of the connecting portion between the resistances R₃ and R₄ (and therefore the voltage applied to the other input terminal of the first comparator 432), and the feeding of the signal "H" from the first comparator 432 is stopped. As a result, the supplying of the actuation signal to the switch means 442 is stoped, and the switch means 442 is opened to cancel the passing of an electrical current to the electrical heating element 406. Once the temperature detected by the thermistor 430 has reached the first predetermined temperature T₁ (the arrival at the first predetermined temperature T₁ can be detected by the stopping of the supplying of the signal "H" from the first comparator 432), the electrical heating element 406 is controlled depending upon whether the copying cycle signal producing means 438 produces a copying cycle signal. When the signal producing means 438 is producing a copying cycle signal, the electrical heating element 406 is controlled by the output signal from the first comparator 432, and consequently, the electrical heating element 406 is controlled so that the temperature detected by the thermistor 430 becomes substantially equal to the first predetermined temperature T₁. (More specifically, when the means 438 is producing the copying cycle signal, the control means 250 produces an actuation signal on the basis of the signal "H" from the first comparator 432. This actuation signal closes the switch means 442 and energizes the electrical heating element 406. Furthermore, the feeding of the actuation signal is stopped by the stopping of the feeding of the signal "H" from the first comparator 432. This opens the switch means 442 and deenergizes the electrical heating element 406. Thus, the electrical heating element is controlled as stated above.) On the other hand, when the means 438 is not producing the copying cycle signal, the feeding of the actuation signal from the control means 250 is stopped owing to the absence of the copying cycle signal irrespective of the output signals from the first comparator 432 and the second comparator 434, and the switch means 442 is opened to deenergize the electrical heating element. Accordingly, when the copying cycle signal is produced after the temperature detected by the thermistor 430 has exceeded the first predetermined temperature T₁, the temperature detected by the thermistor 430 is controlled substantially to the first predetermined temperature T₁ as shown by the solid line in Figure 7. When thereafter the feeding of the copying cycle signal is stopped at time t₁, the electrical heating element 406 is deenergized and the temperature detected by the thermistor 430 is lowered as shown by a two-dot chain line in Figure 7 after time t₁.

When the electrical heating element 406 is deenergized and the temperature detected by the thermistor 430 becomes lower than the second predetermined temperature T₂ (about 150^{o}C, for example), the voltage of the other terminal of the thermistor 430 (and therefore the voltage applied to one input terminal of the second comparator 434) becomes lower than the voltage of the connecting portion between the resistances R₄ and R₅ (and therefore the voltage applied to the other input terminal of the second comparator 434), and a signal "H" is fed from the second comparator 434. On the basis of this signal "H", the control means 250 produces a power supply shutting signal which causes opening of the power supply switch 440 (and therefore the feeding of an electric current to the electrostatic copying apparatus is stopped). When after stopping of the feeding of the copying cycle signal at tide t₁, the means 438 produces a copying cycle signal (produced, for example, by depressing the copying start switch) at time t₂ (at which the temperature detected by the thermistor 430 has not been lowered to the second predetermined temperature T₂), the electrical heating element 406 is controlled on the basis of the output signal from the first comparator 432, and the temperature detected by the thermistor 430 is raised as shown by a one-dot chain line in Figure 7 after time t₂, and thereafter, the detected temperature becomes substantially equal to the first predetermined temperature T₁ as shown by the solid line in Figure 7. When, for example, the copying start switch (not shown) is depressed at time t₃ or later after the stopping of the feeding of the copying cycle signal at time t₁, the electrical heating element 406 will not be energized since the power supply switch 440 is off.

When the production of a copying cycle signal is again terminated at time t₄ after the production of the copying cycle signal at time t₂, the feeding of the actuation signal from the control means 250 is stopped, and the switch means 442 is turned off to deenergize the electrical heating element 406. Accordingly, when the production of the copying cycle signal is again terminated at time t₄, the electrical heating element 406 is deenergized and the temperature of the thermistor 430 detected is lowered as shown by the solid line in Figure 7 after time t₄. When the temperature detected by the thermistor 430 becomes lower than the second predetermined temperature T₂ at time t₅, the power supply switch 440 is turned off to stop feeding an electric current to the electrostatic copying apparatus. To start the copying cycle after the power supply switch 440 has been turned off in this manner, the power supply switch 440 is again closed. As a result, the electrostatic copying apparatus is controlled as stated above.

The electrostatic copying apparatus equipped with the fixing device 130 including the electrical heating element 406 is constructed such that the electrical heating element is deenergized when after the temperature detected by the thermistor 430 has exceeded the first predetermined temperature T₁, a copying cycle signal is not produced. Accordingly, wasteful consumption of power by the electrical heating element 406 can be prevented, and the power can be saved more effectively than in the prior art.

Furthermore, the aforesaid fixing device 130 is constructed such that the power supply switch is turned off when the electrical heating element 406 is deenergized and the temperature detected by the thermistor 430 (i.e. the temperature of the surface of the upper roller 136 and its vicinity) is lowered to the second predetermined temperature T₂. Hence, it is possible to prevent surely the performance of the fixing operation at a temperature below the second predetermined temperature T₂ (the temperature at which fixation is not adversely affected even when the copying cycle is started), and poor fixation can be prevented.

Controlling of the passing of an electric current to the electrical heating element 406 during the generation of the copying cycle signal is not limited to the opening or closing of the switch means 442 by the actuation signal. Alternatively, the number of half cycles of an alternate current fed to the electrical heating element 406 can be controlled on the basis of the output signal from the thermistor 430, or the conducting phase angle of each half cycle of an alternate current fed to the electrical heating element may also be controlled in order to achieve the above purpose.

The above specific embodiment is constructed such that when no copying cycle signal is produced after the temperature detected by the thermistor 430 has exceeded the first predetermined temperature T₁, the electrical heating element 406 is deenergized, and when the temperature detected by the thermistor becomes lower than the second predetermined temperature T₂, the power supply switch 442 is opened. Alternatively, it is also possible to construct it such that when no copying cycle signal is produced after the detected temperature has exceeded the first predetermined temperature T₁, the electrical heating element 406 is deenergized, and when the detected temperature is lowered to the second predetermined temperature T₂, it is maintained at the second predetermined temperature T₂. This alternative means can also lead to the effective saving of power.

Now, with reference to Figure 8, the operation and advantage of the above modified embodiment will be briefly described. The control circuit in the modified embodiment is substantially the same as the control circuit of the embodiment shown in Figure 6 except that the power supply switch 440 is excluded. A description of the structure of the control circuit itself is omitted, but the same parts will be referred to by the same reference numerals. When the power switch 440 is closed at time tₒ, an actuation signal is generated in the control means 250, and this actuation signal continues to be generated until the temperature detected by the thermistor 430 has exceeded the first predetermined temperature T₁ (about 185^{o}C). As a result, the switch means 442 is closed, and the electrical heating element 406 conducts via the switch means 442, and the temperature detected by the thermistor 430 is raised to the first predetermined temperature T₁. When after the lapse of time tₒ₁ from the closing of the power supply switch 440 the detected temperature of the thermistor 430 exceeds the first predetermined temperature T₁, the electrical heating element 406 is thereafter controlled depending upon whether the copying cycle signal producing means 438 is producing a copying cycle signal or not. When the copying cycle signal is produced even after the detected temperature has reached the first predetermined temperature T₁, the electrical heating element 406 is controlled on the basis of the output signal from the first comparator 432. Thus, the electrical heating element 406 is controlled so that the detected temperature of the thermistor 430 becomes substantially equal to the first predetermined temperature T₁. On the other hand, when at time t₁, the production of the copying cycle signal is terminated, the electrical heating element 406 is controlled on the basis of the output signal from the second comparator 434. Thus, the electrical heating element 406 is deenergized until time t₂, and thereafter, controlled so that the temperature detected by the thermistor 430 becomes substantially equal to the second predetermined temperature T₂.

When a copying cycle signal is again produced (for example, by depressing the copying start switch), the electrically heating element 406 is controlled on the basis of the output signal from the first comparator 432. Thus, the electrical heating element 406 is energized until time t₄ and thereafter controlled again such that the temperature detected by the thermistor 430 becomes substantially equal to the first predetermined temperature T₁.

When thereafter the generation of the copying cycle signal is terminated at time t₅ and the power supply switch 440 is opened at time t₇, feeding of an electrical current to the electrostatic copying apparatus is stopped, whereby the electrical heating element 406 is not energized and the temperature detected by the thermistor 430 is lowered.

The electrostatic copying apparatus improved in accordance with this invention has been described in detail hereinabove with reference to its preferred embodiments shown in the accompanying drawings. It should be understood however that the invention is not limited to these specific embodiments, and various changes and modifications are possible without departing form the scope of the invention as claimed.

## Claims

1. An electrostatic copying apparatus comprising a fixing device (130) including an electrical heating element (406), a temperature detecting means (430) for detecting temperature at a specified position of the fixing device, a copying cycle signal producing means (438) for producing a copying cycle signal according to the performance of the copying cycle, a power supply switch (440), and control means (250) for the electrical heating element and the power supply switch;
**characterized,** in that
the control means (250) is arranged to energize upon the closing of the power supply switch (440) the electrical heating element (406) until the temperature detected by the temperature detecting means (430) reaches a first predetermined temperature T₁, and thereafter, when the copying cycle signal is produced, to control the energization and deenergization of the electrical heating element (406) on the basis whether the temperature detected by the temperature detecting means (430) is the first predetermined temperature T₁, and when the copying cycle signal is not produced, to deenergize the electrical heating element (406), and to open the power supply switch (440) when the temperature detected by the temperature detecting means (430) is lowered to a second predetermined temperature T₂ which is lower than the first predetermined temperature T₁.

2. The apparatus of claim 1, wherein the first predetermined temperature T₁ is a temperature suitable for fixation.

3. The apparatus of claim 1 or 2, wherein the second predetermined temperature T₂ is a temperature chosen to provide a reliable fixation even in an immediately started copying cycle.

4. The apparatus of one of claims 1 to 3, wherein the fixing device includes a fixing roller pair composed of rollers (136, 138) cooperating with each other, the electrical heating element (406) is disposed within one of the rollers of the fixing roller pair, and the temperature detecting means (430) is arranged to detect the temperature of the surface of one of the fixing rollers or its vicinity.

5. An electrostatic copying apparatus comprising a fixing device (130) including an electrical heating element (406), a temperature detecting means (430) for detecting temperature at a specified position in the fixing device, a copying cycle signal producing means (438) for producing a copying cycle signal according to the performance of the copying cycle, a power supply switch (440) and a control means (250) for the electrical heating element and the power supply switch,
characterized in that
said control means (250) is arranged to energize upon closing of the power supply switch (440) the electrical heating element (406) until the temperature detected by the temperature detecting means (430) reaches a first predetermined temperature T₁, and thereafter, when the copying cycle signal is produced, to control the energization and deenergization of the electrical heating element (406) on the basis of whether the temperature detected by the temperature detecting means (430) is the first predetermined temperature T₁, and when the copying cycle signal is not produced, to deenergize the electrical heating element (406), and, when the temperature detected by the temperature detecting means (430) is lowered to a second predetermined temperature T₂ which is lower than the first predetermined temperature T₁, to control the energization and deenergization of the electrical heating element (406) on the basis of whether the temperature detected by the temperature detecting means (430) is the second predetermined temperature T₂.

6. The apparatus of claim 5, wherein the first predetermined temperature T₁ is a temperature suitable for fixation.

7. The apparatus of claim 5 or 6, wherein the second predetermined temperature T₂ is a temperature chosen to provide a reliable fixation even in an immediately started copying cycle.

8. The apparatus of one of claims 5 to 7, wherein the fixing device includes a fixing roller pair composed of rollers (136, 138) cooperating with each other, the electrical heating element (406) is disposed within one of the rollers, and the temperature detecting means (430) is arranged to detect the temperature of the surface of one of the fixing rollers or its vicinity.

## Patentansprüche

1. Elektrostatische Kopiervorrichtung mit einer ein elektrisches Erwärmungselement (406) aufweisenden Fixiervorrichtung (130), einer Temperaturerfassungseinrichtung (430) zur Erfassung der Temperatur an einer bestimmten Position der Fixiervorrichtung, einer Kopierzyklussignal-Erzeugungseinrichtung (438) zur Erzeugung eines Kopierzyklussignals entsprechend dem Fortschritt des Kopierzyklus, einem Energiezuführschalter (440) und einer Steuerungseinrichtung (250) für das elektrische Erwärmungselement und den Energiezuführschalter;
dadurch gekennzeichnet, daß
die Steuerungseinrichtung (250) dazu ausgelegt ist, das elektrische Erwärmungselement (406) auf das Schließen des Energiezuführschalters (440) hin mit Energie zu versorgen, bis die von der Temperaturerfassungseinrichtung (430) erfaßte Temperatur eine erste vorbestimmte Temperatur T₁ erreicht, und danach, wenn das Kopierzyklussignal erzeugt wird, die Energiezufuhr für das elektrische Erwärmungselement (406) entsprechend dem Kriterium zu steuern, ob die durch die Temperaturerfassungseinrichtung (430) erfaßte Temperatur die erste vorbestimmte Temperatur T₁ ist, und wenn das Kopierzyklussignal nicht erzeugt wird, das elektrische Erwärmungselement (406) nicht mit Energie zu versorgen und den Energiezuführschalter (440) zu öffnen, wenn die durch die Temperaturerfassungseinrichtung (430) erfaßte Temperatur auf eine zweite vorbestimmte Temperatur T₂ gefallen ist, die niedriger als die erste vorbestimmte Temperatur T₁ ist.

2. Vorrichtung nach Anspruch 1, bei der die erste vorbestimmte Temperatur T₁ eine für das Fixieren geeignete Temperatur ist.

3. Vorrichtung nach Anspruch 1 oder 2, bei der die zweite vorbestimmte Temperatur T₂ eine so gewählte Temperatur ist, daß sich auch bei einem augenblicklich begonnenen Kopierzyklus eine zuverlässige Fixierung ergibt.

4. Vorrichtung nach einem der Ansprüche 1 bis 3, bei der die Fixiervorrichtung ein aus zwei zusammenwirkenden Rollen (136, 138) aufgebautes Fixierrollenpaar aufweist, wobei das elektrische Erwärmungselement (406) innerhalb einer der Rollen des Fixierrollenpaars angebracht ist und die Temperaturerfassungseinrichtung (430) zur Erfassung der Temperatur der Oberfläche einer der Fixierrollen oder ihrer unmittelbaren Umgebung ausgelegt ist.

5. Elektrostatische Kopiervorrichtung mit einer ein elektrisches Erwärmungselement (406) aufweisenden Fixiervorrichtung (130), einer Temperaturerfassungseinrichtung (430) zur Erfassung der Temperatur an einer bestimmten Position der Fixiervorrichtung, einer Kopierzyklussignal-Erzeugungseinrichtung (438) zum Erzeugen eines Kopierzyklussignals entsprechend dem Fortgang des Kopierzyklus, einem Energiezuführschalter (440) und einer Steuerungseinrichtung (250) für das elektrische Erwärmungselement und den Energiezuführschalter,
dadurch gekennzeichnet, daß
die Steuerungseinrichtung (250) dazu ausgelegt ist, auf das Schließen des Energiezuführschalters (440) hin das elektrische Erwärmungselement (406) mit Energie zu versorgen, bis die durch die Temperaturerfassungseinrichtung (430) erfaßte Temperatur eine erste vorbestimmte Temperatur T₁ erreicht, und danach, wenn das Kopierzyklussignal erzeugt wird, die Energiezufuhr für das elektrische Erwärmungselement (406) anhand des Kriteriums zu steuern, ob die durch die Temperaturerfassungseinrichtung (430) erfaßte Temperatur die erste vorbestimmte Temperatur T₁ ist, und wenn das Kopierzyklussignal nicht erzeugt wird, die Energiezufuhr des elektrischen Erwärmungselements (406) zu unterbrechen, und wenn die durch die Temperaturerfassungseinrichtung (430) erfaßte Temperatur auf eine zweite vorbestimmte Temperatur T₂ gefallen ist, die kleiner als die erste vorbestimmte Temperatur T₁ ist, die Energiezufuhr für das elektrische Erwärmungselement (406) anhand des Kriteriums zu steuern, ob die durch die Temperaturerfassungseinrichtung (430) erfaßte Temperatur die zweite vorbestimmte Temperatur T₂ ist.

6. Vorrichtung nach Anspruch 5, bei der die erste vorbestimmte Temperatur T₁ eine für das Fixieren geeignete Temperatur ist.

7. Vorrichtung nach Anspruch 5 oder 6, bei der die zweite vorbestimmte Temperatur T₂ eine so gewählte Temperatur ist, daß sie auch bei einem unmittelbar begonnenen Kopierzyklus eine zuverlässige Fixierung erlaubt.

8. Vorrichtung nach einem der Ansprüche 5 bis 7, bei der die Fixiervorrichtung ein aus zwei zusammenwirkenden Rollen (136, 138) aufgebautes Fixierrollenpaar aufweist, wobei das elektrische Erwärmungselement (406) innerhalb einer der Rollen angebracht ist, und wobei die Temperaturerfassungseinrichtung (430) zur Erfassung der Temperatur der Oberfläche einer der Fixierrollen oder ihrer nächsten Umgebung ausgelegt ist.

## Revendications

1. Un appareil à copier électrostatique comprenant un dispositif de fixage (130) incluant un élément de chauffage électrique (406), un moyen de détection de température (430) pour détecter une température à une position spécifiée du dispositif de fixage, un moyen de production d'un signal de cycle de copiage (438) pour produire un signal de cycle de copiage en conformité avec l'exécution du cycle de copiage, un interrupteur d'alimentation en courant (440) et un moyen de commande (250) pour l'élément de chauffage électrique et l'interrupteur d'alimentation en courant ;
caractérisé en ce que
le moyen de commande (250) est agencé pour activer, lors de la fermeture de l'interrupteur d'alimentation en courant (440), l'élément de chauffage électrique (406) jusqu'à ce que la température détectée par le moyen de détection de température (430) atteigne une première température prédéterminée T₁ et, ensuite, lorsque le signal de cycle de copiage est produit, pour commander l'activation et la désactivation de l'élément de chauffage électrique (406) sur la base du fait que la température détectée par le moyen de détection de température (430) est la première température détectée T₁ et, lorsque le signal de cycle de copiage n'est pas produit, de désactiver l'élément de chauffage électrique (406) et d'ouvrir l'interrupteur d'alimentation en courant (440) lorsque la température détectée par le moyen de détection de température (430) est inférieure à une seconde température prédéterminée T₂ qui est inférieure à la première température prédéterminée T₁.

2. L'appareil de la revendication 1,
dans lequel la première température prédéterminée T₁ est une température appropriée pour le fixage.

3. L'appareil de la revendication 1 ou 2,
dans lequel la seconde température prédéterminée T₂ est une température choisie pour produire un fixage fiable même dans un cycle de copiage démarré immédiatement.

4. L'appareil de l'une des revendications 1 à 3,
dans lequel le dispositif de fixage inclut une paire de rouleaux de fixage composée de rouleaux (136, 138) coopérant l'un avec l'autre, l'élément de chauffage électrique (406) est disposé à l'intérieur de l'un des rouleaux de la paire de rouleaux de fixage et le moyen de détection de température (430) est agencé pour détecter la température de la surface de l'un des rouleaux de fixage ou de son voisinage.

5. Un appareil à copier électrostatique comprenant un dispositif de fixage (130) incluant un élément de chauffage électrique (406), un moyen de détection de température (430) pour détecter une température à une position spécifiée dans le dispositif de fixage, un moyen de production d'un signal de cycle de copiage (438) pour produire un signal de cycle de copiage en conformité avec l'exécution du cycle de copiage, un interrupteur d'alimentation en courant (440) et un moyen de commande (250) pour l'élément de chauffage électrique et l'interrupteur d'alimentation en courant ;
caractérisé en ce que
ledit moyen de commande (250) est agencé pour activer, par la fermeture de l'interrupteur d'alimentation en courant (440), l'élément de chauffage électrique (406) jusqu'à ce que la température détectée par le moyen de détection de température (430) atteigne une première température prédéterminée T₁ et, ensuite, lorsque le signal de cycle de copiage est produit, pour commander l'activation et la désactivation de l'élément de chauffage électrique (406) sur la base que la température détectée par le moyen de détection de température (430) est la première température prédéterminée T₁ et, lorsque le signal de cycle de copiage n'est pas produit, de désactiver l'élément de chauffage électrique (406) et, lorsque la température détectée par le moyen de détection de température (430) est inférieure à une seconde température prédéterminée T₂ qui est inférieure à la première température prédéterminée T₁, de commander l'activation et la désactivation de l'élément de chauffage électrique (406) sur la base que la température détectée par le moyen de détection de température (430) est la seconde température prédéterminée T₂.

6. L'appareil de la revendication 5,
dans lequel la première température prédéterminée T₁ est une température appropriée pour le fixage.

7. L'appareil de la revendication 5 ou 6,
dans lequel la seconde température prédéterminée T₂ est une température choisie pour produire un fixage fiable même dans un cycle de copiage démarré immédiatement.

8. L'appareil de l'une des revendications 5 à 7,
dans lequel le dispositif de fixage comprend une paire de rouleaux de fixage composée de rouleaux (136, 138) coopérant l'un avec l'autre, l'élément de chauffage électrique (406) est disposé à l'intérieur de l'un des rouleaux et le moyen de détection de température (430) est agencé pour détecter la température de la surface de l'un des rouleaux de fixage ou de son voisinage.
